Europäisches Patentamt

European Patent Office

Office européen des brevets

(19)

(11) Veröffentlichungsnummer: **0 226 604 B1**

# (12) EUROPÄISCHE PATENTSCHRIFT
## veröffentlicht nach Art. 158 Abs. 3 EPÜ

(45) Veröffentlichungstag der Patentschrift: **21.08.91**

(21) Anmeldenummer: **86903179.9**

(22) Anmeldetag: **29.05.86**

(86) Internationale Anmeldenummer:
**PCT/CH86/00072**

(87) Internationale Veröffentlichungsnummer:
**WO 86/07149 (04.12.86 86/26)**

(51) Int. Cl.⁵: **G01N 21/41**, G01N 21/75, G01N 33/53

(54) **OPTISCHER SENSOR ZUM SELEKTIVEN NACHWEIS VON SUBSTANZEN UND ZUM NACHWEIS VON BRECHZAHLÄNDERUNGEN IN MESSUBSTANZEN.**

(30) Priorität: **29.05.85 CH 2256/85**
**29.05.85 CH 2257/85**

(43) Veröffentlichungstag der Anmeldung:
**01.07.87 Patentblatt 87/27**

(45) Bekanntmachung des Hinweises auf die Patenterteilung:
**21.08.91 Patentblatt 91/34**

(84) Benannte Vertragsstaaten:
**CH DE FR GB IT LI NL SE**

(56) Entgegenhaltungen:
**WO-A-81/00912**
**US-A- 3 856 404**
**US-A- 4 344 438**

(73) Patentinhaber: **Artificial Sensing Instruments ASI AG**
**Binzmühlestrasse 170/b**
**CH-8050 Zürich(CH)**

(72) Erfinder: **Tiefenthaler, Kurt**
**Bächlerstrasse 7**
**CH-8046 Zürich(CH)**
Erfinder: **Lukosz, Walter**
**Burstwiesenstrasse 55**
**CH-8606 Greifensee(CH)**

(74) Vertreter: **Hunziker, Kurt**
**c/o Werkzeugmaschinenfabrik Oerlikon-Bührle AG Birchstrasse 155**
**CH-8050 Zürich(CH)**

Optics Letters, Vol. 10, No. 4, April 1984, New York, N.Y. (US) K. Tiefenthaler et al.: "Integrated optical switches and gas sensors", pages 137-139, see page 137

Analytical Chemistry, Vol. 54, No. 9, August 1982, Columbus, Ohio (US) I. Chabay: "Optical Waveguides", pages 1071A-1080A, see page 1078A, left and central column

Optics Letters, Vol. 8, No. 10, October 1983 New York, N.Y. (US) W. Lukosz et al.: "Embossing technique for fabricating integrated optical components in hard inorganic waveguiding materials", pages 537-539, see page 537, left column

Clinical Chemistry, Vol. 30, No. 9, September 1984, Winston-Salem, NC (US) R.M. Sutherland et al.: "Optical detection of antibody-antigen reactions at a glass-liquid interface", pages 1533-1538, see page 1535, left column from "Microscope slide", right column to "acid-washing procedure"; figures 2,3

## Beschreibung

Die vorliegende Erfindung betrifft einen optischen Sensor gemaess Oberbegriff des Patentanspruches 1. Ein bekanntes Geraet zur Erfassung von Brechzahlaenderungen in Fluessigkeiten, Festkoerpern und poroesen Messubstanzen ist das Refraktometer, das den Totalreflexionswinkel zwischen zwei Medien bestimmt, wobei das Referenzmedium aus einem hochbrechenden Prisma besteht, dessen Brechzahl bekannt ist. Ein bekanntes Geraet zum Nachweis vom Chemisorbatschichten oder von chemisch gebundenen Schichten auf Oberflaechen ist das Ellipsometer, das den Polarisationszustand des an der Chemisorbatschicht reflektierten Lichtes analysiert (vergleiche hierzu R. Azzam et al., Physics in Medicine and Biology 22 (1977) 422-430, P.A. Cuypers et al., Analytical Biochemistry 84 (1978), 56-67). Diese Geraete beanspruchen relativ viel Platz und das benoetigte Messvolumen ist verhaeltnismaessig gross, was fuer kostspielige Messubstanzen von grossem Nachteil sein kann. Zudem ist im Falle des Ellipsometers die Messgenauigkeit beschraenkt, da die Messkuevette den Polarisationszustand des Lichtes beeinflusst. Ein anderes bekanntes Instrument zum Nachweis von adsorbierten Antigenen, Antikoerpern und Haptenen ist das Reflektometer, wie es in EP-A-0073980 beschrieben wird. Ein relativ neues Verfahren zur Detektion von Adsorbatschichten besteht in der Anregung von Oberflaechenplasmonen an Metallschichtgrenzflaechen mit oder ohne Verwendung von Beugungsgittern (vergleiche hierzu B. Liedberg et al., Sensors and Actuators 4 (1983), 299 und EP-A-0112721). Duenne Metallschichten sind bekanntlich nicht sehr stabil und zeigen Alterungseffekte in ihren optischen Eigenshaften, was Probleme bei der praktischen Anwendung mit sich bringen koennte.

Die gebraeuchlichsten Verfahren zur immunologischen Bestimmung von Antikoerpern, Antigenen und Haptenen bzw. zur Konzentrationsbestimmung von Stoffwechselprodukten wie Glucose basieren auf der Verwendung von Markierungssubstanzen wie Radioisotope, Enzyme oder Fluorochrome ( EP-A-0103426, US-A-4344438 ), die chemisch an einen Gegenliganden, d. h. an das komplementaere Biomolekuel gebunden werden. Vielfach fuehrt die Markierung jedoch zu einer Stoerung des Bindungsverhaltens des betreffenden Biomolekuels, d.h. die Bindungsaffinitaet nimmt ab.

Ellipsometrie, Reflektometrie und Oberflaechenplasmonanregung lassen eine direkte Messung ( ohne Markierungssubstanzen ) der immunologischen Reaktion zu, haben aber oben erwaehnte Nachteile. Eine weitere Methode zur direkten Messung ist die Nephelometrie, welche aber nicht sehr empfindlich ist.

Im Dokument "OPTICS LETTERS, Band 10, Nr. 4, April 1984, New York, USA" sind auf den Seiten 137 - 139 "Integrated optical switches and gas sensors" beschrieben, welche die Merkmale des Oberbegriffes des Patentanspruchs 1 aufweisen, wobei die Verfasser und die Erfinder der vorliegenden Anmeldung identisch sind. Es bezieht sich auf einen dispersiven Sensor, mit dem die Änderung des optischen Brechungsindexes bzw. die Änderung des effektiven Brechungsindexes bestimmt wird, und demonstriert einen physikalischen Effekt, bei dem bereits wenige Moleküle den Mode erheblich beeinflussen können. Aufgrund dieser besonderen Empfindlichkeit des Sensors beeinflussen jedoch schon kleinste Störungen die Messungen erheblich und verunsichern die Wertung der Messresultate.

Ferner ist aus der Patentanmeldung WO-A-81/00912 ein transmittiver Sensor bekannt geworden, bei dem die in einem Fiberstab transmittierte Energie derart ausgewählt wird, dass eine nachzuweisende Substanz in einem den Stab umgebenden Messmedium zu einer Modifikation der transmittierten Energie, durch Licht-Absorption oder Fluoreszenz-Änderung führen kann. Dabei wird zum selektiven Nachweis von Substanzen die wellenleitende Struktur des optischen Sensors mit einer die nachzuweisende Substanz selektiv durchlassenden Schicht, mit einer Schichtdicke zwischen 1 $\mu$m bis 100 $\mu$m versehen. Transmittive Sensoren eignen sich aber nicht zur Bestimmung der Änderung des optischen Brechungsindexes bzw. des effektiven Brechungsindexes.

Weiter zeigt ein Dokument aus Clinical Chemistry, Band 30, Nr. 9, September 1984, R.M. Sutherland et al: "Optical Detection of Antibody-Antigen Reactions at a Glass-Liquid Interface", Seiten 1533 - 1538, Experimentiersysteme, welche im Aufbau ähnlich zu den vorerwähnten Sensoren aus dem Dokument "OPTICS LETTERS" und aus WO-A-81/00912 sind, wobei jedoch die Messubstanz über eine relativ grosse Fläche mit der bzw. dem als Wellenleiter wirkenden Glasplatte bzw. Glasstab in Berührung steht.

Der optische Sensor mit den im Anspruch 1 aufgeführten Merkmalen löst die Aufgabe einen optischen Sensor zum selektiven Nachweis von Substanzen in gasförmigen, flüssigen oder festen Messubstanzen zu schaffen, welcher kommerziell verwendbar ist und zuverlässige Messresultate gewährleistet.

Insbesondere die Wahl der Brechzahl der wellenleitenden Struktur, des Substrats der Messubstanz sowie die Wahl der chemoempfindlichen Substanz und deren Schichtdicke ist wichtig. Vorzugsweise wird für die chemoempfindliche Substanz eine Schichtdicke von weniger als einer Lichtwellenlänge oder das Aufbringen einer Schutzschicht ausserhalb einer Kontaktzone zwischen chemoempfindlicher Substanz und wellenleitender Struktur sowie die Verwendung des Sensors im Monomode-Bereich vorgeschlagen.

Im folgenden wird die Erfindung anhand von Zeichnungen beispielsweise näher erläutert. Es zeigen:

Fig.1 eine schematische Darstellung der Grundelemente der Erfindung, wobei eine an der Oberfläche eines Substrats befindliche wellenleitende Struktur, welche in den Figuren als planarer wellenleitender Film eingezeichnet ist, mit einem Beugungsgitter und mit einer Zusatzschicht versehen ist,

Fig. 2 eine erfindungsgemaesse Messeinrichtung mit einem Gittereinkoppler,

Fig. 3 eine erfindungsgemaesse Messeinrichtung mit einem Gitterauskoppler,

Fig. 4 eine erfindungsgemaesse Messeinrichtung mit einem Bragg-Reflektor,

Fig. 5 eine erweiterte schematische Darstellung der Grundelemente der Erfindung, wobei die wellenleitende Struktur ausserhalb der Gitterregion mit einer Schutzschicht bedeckt ist,

Fig. 6 eine erweiterte schematische Darstellung der Grundelemente der Erfindung, wobei sich zwischen Messsubstanz und wellenleitender Struktur mit Zusatzschicht eine Membran befindet, die gegebenenfalls an einer Kuevette befestigt ist,

Fig. 7 eine erfindungsgemaesse Einrichtung zur indirekten Messung der Intensitaet der gefuehrten Lichtwelle, wobei das von der gefuehrten Lichtwelle erzeugte Streulicht mit einer Faseroptik aufgefangen und einem Detektor zugefuehrt wird,

Fig 8 eine erfindungsgemaesse Einrichtung zur indirekten Messung der Intensitaet der gefuehrten Lichtwelle, wobei die Intensitaet einer oder mehrerer nicht eingekoppelter Beugungsordnungen gemessen wird.

Grundbaustein der integrierten Optik ist die wellenleitende Struktur, insbesondere der planare Wellenleiter. Dieser besteht aus einer duennen dielektrischen Schicht, die sich auf einem Substrat befindet. Eingekoppeltes Laserlicht kann durch Totalreflexion in dieser duennen Schicht gefuehrt werden . Die Ausbreitungsgeschwindigkeit einer solchen gefuehrten Lichtwelle ( nachstehend als "Mode" bezeichnet ) betraegt c/N, wobei c die Lichtgeschwindigkeit im Vakuum und N die effektive Brechzahl des im Wellenleiter gefuehrten Modes sind. Die effektive Brechzahl N wird einerseits durch die Konfiguration des Wellenleiters ( Schichtdicke und Brechzahl der duennen wellenleitenden Schicht sowie Brechzahl des Substrats ) und andererseits durch die Brechzahl des an die duenne wellenleitende Schicht angrenzenden Mediums festgelegt.

Lichtwellenleitung kann nicht nur in einer duennen planaren Schicht sondern auch in anderen wellenleitenden Strukturen bewirkt werden, insbesondere in Streifenwellenleitern, bei denen die wellenleitende Struktur in Form eines streifenfoermigen Films vorliegt.

Auf der wellenleitenden Schicht (oder zwischen dieser und dem Substrat) ist eine duenne Zusatzschicht angebracht werden, ohne dass die wellenleitenden Eigenschaften des Schichtsystems vollstaendig zerstoert werden.

Ein fuer die Wirkungsweise des Sensors wesentlicher Effekt ist, dass eine Aenderung der effektiven Brechzahl N hervorgerufen wird durch eine Aenderung des an die wellenleitende Schicht angrenzenden Mediums und/oder durch eine Aenderung der Brechzahl (und/oder der optischen Absorption) und/oder der Dicke der wellenleitenden Schicht selbst oder der an sie angrenzenden Zusatzschicht, wobei diese Aenderungen durch Molekuele der nachzuweisenden Substanz ueber Adsorptions-, Desorptions-, oder Chemisorptionsvorgaenge oder ueber chemische Reaktionen bewirkt werden.

Zum Nachweis von Brechzahlaenderungen einer Messsubstanz wird diese direkt auf die wellenleitende Schicht aufgebracht oder gegebenenfalls auf eine geeignete Membran, welche verhindert, dass in der Messsubstanz vorhandene Verunreinigungen inbesondere Partikel mit der wellenleitenden Schicht in Kontakt kommen und die Messung stoeren.

Die Selektivitaet beim Nachweis von einer spezifischen Substanz, die in einer Messsubstanz enthalten ist (z.B. von gewissen Biomolekuelen in einer fluessigen Phase), wird durch eine der beiden folgenden Massnahmen oder durch ihre Kombination erreicht:

1) Mit einer Membran, die bevorzugt die nachzuweisende Substanz durchlaesst, wird bewirkt, dass nur die nachzuweisende Substanz mit der wellenleitenden Schicht mit Zusatzschicht in Kontakt kommt.

2) Durch geeignete Wahl der Zusatzschicht wird bewirkt, dass bevorzugt die nachzuweisende Substanz im Innern oder an der Oberflaeche der Zusatzschicht physi- oder chemisorbiert wird oder chemische Reaktionen und/oder die Desorption gewisser Teile der Zusatzschicht ausloest.

Das Prinzip des Sensors beruht darauf, dass Aenderungen der effektiven Brechzahl mit einem als Gittereinkoppler oder als Gitterauskoppler oder als Bragg-Reflektor dienenden Beugungsgitter detektiert werden koennen. Die Wirkungsweise des Gittereinkopplers, des Gitterauskopplers und des Bragg-Reflektors wird anhand der Figuren naeher beschrieben.

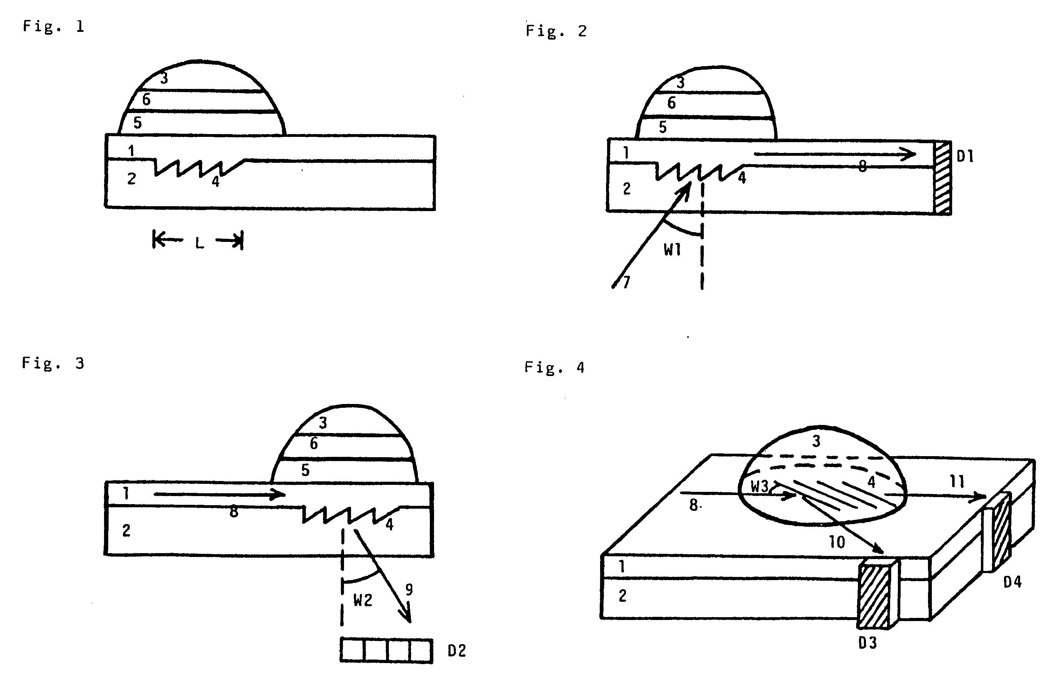

Fig. 1 zeigt in schematischer Darstellung die Grundelemente der Erfindung. Eine duenne Schicht befindet sich in Form eines planaren wellenleitenden Films 1 auf einem Substrat 2 (beispielsweise einem Pyrex-Glas). Der wellenleitende Film 1 und das Substrat 2 bilden zusammen den sogenannten Wellenleiter 1/2. Der wellenleitende Film kann beispielsweise aus einer Oxidschicht (wie SiO2, TiO2, SnO2 oder Mischungen davon) oder einer Kunststoffschicht (wie Polystyrol, Polycarbonat etc.) oder aus Kombinationen von zwei oder mehreren Schichten uebereinander bestehen. Mit Diffusionstechniken kann beispielsweise auch die Oberflaeche eines Substrats derart behandelt werden, dass unmittelbar unter der Oberflaeche ein wellenleitender Film entsteht. Damit sich Laserlicht via Totalreflexion im wellenleitenden Film 1 ausbreiten kann, muss die Brechzahl des wellenleitenden Films 1 groesser als die der benachbarten Medien ( d.h. des Substrats 2 und der Messubstanz 3 ) sein. Der wellenleitende Film 1 darf auch eine mikroporoese Struktur aufweisen, wie dies zum Beispiel bei der Filmherstellung mit einem Tauchbeschichtungsverfahren erreicht werden kann.

Auf der entweder dem Substrat 2 oder der Messubstanz 3 zugewandten Oberflaeche des wellenleitenden Films 1 oder auch in dessen Volumen befindet sich ein Beugungsgitter 4 der Laenge L. Oberflaechen-reliefgitter koennen beispielsweise mit einem Praegeverfahren hergestellt werden, wobei die Gitterstruktur des Masters entweder in das Substrat 2 oder in den wellenleitenden Film 1 eingepraegt wird. Das Praegen in Kunststoffen und organometallischen Sol-Gel-Schichten ist in der Literatur beschrieben (vergleiche z.B. R. Ulrich et al., Appl. Phys. Lett. 20 (1972), 213-215 und W. Lukosz und K. Tiefenthaler, Optics Letters 8 (1983), 537-539).

Insbesondere ist es mit der Praegetechnik moeglich, auch wenn der Praegestempel ein gleichmaessig moduliertes Mastergitter aufweist, eine in Richtung senkrecht zu den Gitterstrichen ortsabhaengige Modulation des gepraegten Oberflaechenreliefgitters zu erzeugen. Dies kann insbesondere dadurch erreicht werden, dass der Praegedruck ortsabhaengig ist und das Mastergitter und/oder das Substrat 2 mit oder ohne wellenleitendem Film 1 durchbiegbar sind. Ein Oberflaechenreliefgitter, das aus zwei stark modulierten Gitterbereichen besteht, die durch einen weniger stark modulierten Bereich getrennt sind, kann mit erwaehnter Praegetechnik hergestellt werden, indem das Mastergitter mit zwei raeumlich getrennten zueinander parallelen Schneiden gegen das Substrat 2 mit oder ohne wellenleitendem Film 1 gedrueckt wird.

Das Beugungsgitter 4 dient dazu, entweder einen einfallenden Laserstrahl in den wellenleitenden Film 1 einzukoppeln oder einen bereits im wellenleitenden Film 1 gefuehrten Mode auszukoppeln oder einen gefuehrten Mode teilweise in Vorwaertsriohtung durchzulassen und teilweise zu reflektieren.

Der wellenleitende Film 1 ist zumindest in der Gitterregion mit einer Zusatzschicht 5 bedeckt, welche einen selektiven Nachweis einer in der Messubstanz 3 enthaltenen Substanz ermoeglicht. Die zu untersuchende Substanz 3, welche auch als "Messubstanz" bezeichnet wird, wird zumindest in der Gitterregion auf die Zusatzschicht 5 aufgebracht.

Brechzahlaenderungen einer fluessigen Messubstanz 3 koennen beispielsweise durch eine in ihr ablaufende (bio)chemische Reaktion zustandekommen. Die Messubstanz 3 kann aber auch aus einem Festkoerper oder einem poroesen Material bestehen.

Die fuer den selektiven Nachweis notwendige Zusatzschicht 5 oder sogar die wellenleitende Struktur 1 ist so beschaffen, dass sie selektiv nur eine spezifische Substanz, die in der Messubstanz 3 vorhanden ist, chemisorbiert oder chemisch bindet. Das Chemisorbat bildet eine weitere Schicht 6. Dieses Selektivitaetsprinzip des optischen Sensors kann unter anderem in der Immunologie dazu benutzt werden, Antigen-Antikoerper-Kopplungen zu identifizieren. Besteht beispielsweise die Zusatzschicht 5 aus einem bestimmten Antigen, so findet genau dann eine Antigen-Antikoerper-Kopplung statt, wenn in der Messubstanz 3 der dem Antigen entsprechende Antikoerper vorhanden ist. Die chemisorbierte Schicht 6 besteht in diesem Beispiel aus Antikoerpern. Der Bedeckungsgrad der chemisorbierten Schicht 6 haengt von der Konzentration der Antikoerper in der Messubstanz 3, sowie von der Inkubationsdauer ab. Der vorliegende optische Sensor kann somit beispielsweise zur Bestimmung von Antikoerper-Konzentrationen verwendet werden, indem beispielsweise der maximale Bedeckungsgrad oder der sich nach einer bestimmten Zeit einstellende stationaere Bedeckungsgrad bestimmt wird.

Die selektive Erkennung unter Biomolekuelen durch das Schluessel-Schloss Prinzip sichert die Organisation und Regulation aller biologischer Systeme und kommt deshalb auch in der Biosensorik zur Anwendung. Komplementaritaet von Biomolekuelen findet man nicht nur bei Antigenen und Antikoerpern sondern auch beispielsweise zwischen Hapten und Antikoerper, Enzym und Enzyminhibitor, Hormon oder Neurotransmitter und Rezeptor, oder zwischen komplementaeren Nukleinsaeuren und kann somit auch als Selektivitaetsprinzip fuer den optischen Sensor dienen, wobei jeweils eines der komplementaeren Biomolekuele als Zusatzschicht 5 an den wellenleitenden Film 1 immobilisiert wird und das andere Biomolekuel die Schicht 6 bildet.

Bei einem reversiblen Bindungsverhalten einer spezifischen Substanz an einen Rezeptor, ist im Gleichgewicht die Oberflaechenbelegung, d.h. die Dicke der Schicht 6, von der Konzentration der in der Messubstanz 3 geloesten spezifischen Substanz abhaengig. Erniedrigt sich beispielsweise die Konzentration dieser Substanz in der Messubstanz 3, so desorbieren so lange Molekuele dieser Substanz von der Oberflaeche in die Messubstanz 3, bis der Gleichgewichtszustand wieder erreicht ist. Diese Desorption bedeutet, dass die Dicke der Schicht 6 abnimmt.

Das Schluessel-Schloss Prinzip kann auch in komplizierterer Weise angewendet werden. Bekannt ist die sogenannte Sandwich-Methode, bei der das Schluessel-Schloss Prinzip mehrmals nacheinander ausgeuebt wird (Beispiel: Antikoerper-Antigen-Antikoerper-Kopplung). Bekannt ist auch das sogenannte Kompetitionsverfahren, bei dem zwei verschiedene Sorten von Biomolekuelen meistens unterschiedlichen Molekulargewichts um einen gemeinsamen Bindungsplatz am Rezeptor d.h. an der Zusatzschicht 5 kompetitieren. Erhoeht sich die Konzentration einer Molekuelsorte in der Messubstanz 3, so wird die andere Molekuelsorte von den Bindungsplaetzen an den Rezeptoren teilweise verdraengt ( EP-A-0073980 ). Diese Desorption fuehrt zu einer nachweisbaren Aenderung der Dicke der Schicht 6. Diese ist wiederum ein Mass fuer die Konzentration der einen Molekuelsorte, naemlich der nachzuweisenden Substanz.

Eine weitere Moeglichkeit, die Konzentation einer spezifischen Substanz, die in der Messubstanz 3 enthalten ist, zu bestimmen, liegt darin, dass das dynamische Verhalten des Adsorptions- oder Bindungsvorgangs beobachtet wird. Die Aenderung der Dicke der Schicht 6 als Funktion der Zeit bzw. die Geschwindigkeit, mit der die Schicht 6 zunimmt, geben Auskunft ueber die Konzentration der zu detektierenden spezifischen Substanz (vergleiche hierzu G. Traexler, Medizintechnik 99 (1979), 79-84, J. C. Sternberg, Clin. Chem. 1456 (1977)).

Die Oberflaeche des wellenleitenden Films 1 kann vor der Immobilisierung des Rezeptors vorbeschichtet sein. Beispielsweise kann ein duenner Polymerfilm beispielsweise aus Polystyrol auf den wellenleitenden Film 1 aufgebracht werden, um die Haftung des Rezeptors zu verbessern. Anstelle der Polymerschicht kann auch eine Oxidschicht verwendet werden. Vorzuweise verwendet man als Oxide jene Materialien wie sie auch in der (Adsorptions-) Chromatographie als sogenannte feste Phase zur Anwendung gelangen. Mit oder ohne chemische Aktivierung der Oxidschicht kann dann in an sich bekannter Weise der Rezeptor immobilisiert werden. Besteht der wellenleitende Film 1 selbst aus einem Oxid, so kann die erwaehnte Oxid- oder Polymerbeschichtung unter Umstaenden entfallen. Es besteht auch die Moeglichkeit, die Oxidschicht bzw. den wellenleitenden Film 1 mit reaktiven Silanen zu versehen, die eine noch bessere Immobilisierung ermoeglichen.

Die selektiv chemisorbierende oder chemisch bindende Substanz kann in Form der Zusatzschicht 5 vorliegen und/oder auch nur in den Mikroporen des wellenleitenden Films 1 vorhanden sein. Im letzten Fall findet die Chemisorption oder chemische Bindung im wellenleitenden Film 1 selbst statt.

Die Zusatzschicht 5 kann auch so beschaffen sein, dass nur die in der Messubstanz 3 enthaltene und nachzuweisende Substanz in die Zusatzschicht 5 hineindiffundierf. Die Zusatzschicht 5 weist dann ein hohes Loesungsvermoegen fuer die zu detektierende Substanz auf. Diese Art der Erzeugung der Selektivitaet ist schon lange bekannt und wird bei piezoelektrischen Schwingquarzdetektoren verwendet (vergleiche hierzu US-A-3164004). Beispielsweise werden in einem Silikonoelfilm Kohlenwasserstoffe geloest. Bei Adsorption von Kohlenwasserstoffen aendert der mit einem Silikonoelfilm belegte Schwingquarz seine Schwingungsfrequenz (vergleiche hierzu A. Kindlund und I. Lundstroem, Sensors and Actuators 3 (1982/83), 63-77). Die Zusatzschicht 5 kann beispielsweise aus einem solchen Silikonoelfilm bestehen.

Durch die nachzuweisende Substanz in der Zusatzschicht 5 oder im wellenleitenden Film 1 selbst bewirkte chemische Reaktionen koennen auch zu einer Aenderung der Brechzahl und/oder des Lichtabsorptionskoeffizienten (Imaginaerteil der Brechzahl) und/oder der Schichtdicke der betreffenden Schicht fuehren (vergleiche hierzu E.E. Hardy et al., Nature 257 (1975), 666-667 und C. Nylander et al., Sensors and Actuators 3 (1982/83), 79-88). Aber auch in der Messubstanz 3 ablaufende chemische Reaktionen koennen neben einer Aenderung der Brechzahl mit einer Aenderung des Lichtabsorptionskoeffizienten (z.B. Farbumschlag) der Messubstanz 3 verbunden sein. Alle Effekte fuehren zu einer Aenderung der effektiven Brechzahl N, die bei einem von Null verschiedenen Lichtabsorptionskoeffizienten zu einer komplexen Groesse wird.

Nach Fig. 2 kann ein Laserstrahl 7 ueber ein Beugungsgitter 4 in einen Wellenleiter 1/2 eingekoppelt werden und in Form einer gefuehrten Lichtwelle 8 den Wellenleiter 1/2 entlanglaufen. Der Laserstrahl 7 kann von der Seite der Messubstanz her oder mit Vorteil von der Seite des Substrats her auf das Gitter 4 fallen. Als Laser kann beispielsweise ein Helium-Neon Laser, eine kontinuierliche oder gepulste Halbleiter-Laserdiode oder lichtemittierende Diode (LED) mit entsprechender Kollimationsoptik verwendet werden. Die Einkopplungsbedingung hat den Charakter einer Resonanzbedingung. Sie ist dadurch charakterisiert, dass bei konstanter Lichtwellenlaenge des Lasers derjenige Einfallswinkel W1 des Laserstrahls 7, mit dem eine maximale Intensitaet des Modes 8 erreicht wird, von der effektiven Brechzahl abhaengt. Die effektive Brechzahl N des angeregten Modes 8 wird im wesentlichen von den Brechzahlen der am Wellenleiter 1/2 beteiligten Medien, von der Brechzahl der Messubstanz 3, von der Schichtdicke des wellenleitenden Films 1 und von Brechzahl und Schichtdicke der selektiv chemisorbierenden Zusatzschicht 5 und der Chemisorbatschicht 6 bestimmt. Aendert sich durch Einwirkung der Messubstanz 3 die effektive Brechzahl N der gefuehrten Lichtwelle 8 , so ist der ursprunglich gewaehlte Einkopplungswinkel W1 nicht mehr optimal, sodass sich die Intensitaet des Modes 8 aendert. Die Aenderung der effektiven Brechzahl N kann nun auf verschiedene Arten gemessen werden.

Bei kleinen effektiven Brechzahlaenderungen kann bei konstantem Einfallswinkel W1 und konstanter Lichtwellenlaenge die Aenderung der Lichtintensitaet des gefuehrten Modes 8 mit Hilfe eines Detektors D1 gemessen und damit auf die Aenderung der effektiven Brechzahl geschlossen werden. Diese Messmethode eignet sich fuer die Messung von effektiven Brechzahlaenderungen, die kleiner sind als die Halbwertsbreite der Resonanzeinkopplungskurve. Die Einkopplungskurve zeigt sowohl in Abhaengigkeit des Einfallswinkels W1 als auch in Abhaengigkeit der effektiven Brechzahl N ein Resonanzverhalten. Die Halbwertsbreite der Resonanzeinkopplungskurve haengt beugungsbedingt von der Ausdehnung L des Gitters ab (vergleiche hierzu K. Tiefenthaler und W. Lukosz, Optics Letters 9 (1984), 137-139). Beispielsweise bei einer Gitterlaenge L = 6 mm und einer Wellenlaenge von 633 nm koennen Aenderungen der Oberflaechenbelegung von einem Hundertstel einer monomolekularen Schicht, beispielsweise einer H20-Schicht, und/oder Brechzahlaenderungen der Messubstanz 3 in der Groessenordnung von 10 hoch (-5) aufgeloest werden, wenn Intensitaetsaenderungen des gefuehrten Modes mit einer Aufloesung von 1% gemessen werden.

Bei effektiven Brechzahlaenderungen, die groesser als die Halbwertsbreite der Resonanzeinkopplungskurve sind, wird die Lichtintenaitaet des gefuehrten Modes 8 gemessen und der Einkopplungswinkel W1 des Laserstrahls 7 so nachgestellt, dass die Lichtintensitaet stets maximal ist oder zumindest immer den gleichen Wert aufweist. Aus der Aenderung des Winkels W1 kann auf die Aenderung der effektiven Brechzahl geschlossen werden. Es besteht auch die Moeglichkeit, den Winkel W1 aufgrund von Berechnungen derart zu waehlen, dass ein Mode 8 von maximaler Intensitaet erst dann entsteht, wenn die Dicke der Chemisorbatschicht 6 und/oder die Brechzahlaenderung der Messubstanz 3 einen gewuenschten Wert erreicht haben.

Eine weitere Messmethode nutzt die Tatsache aus, dass der Einfallswinkel W1, bei dem der Laserstrahl 7 optimal eingekoppelt wird, von der Lichtwellenlaenge des Lesers abhaengig ist. Die Messmethode besteht nun darin, dass bei konstantem Einfallswinkel W1 die Lichtwellenlaenge eines abstimmbaren Lesers derart geaendert wird, dass der gefuehrte Mode 8 trotz Aenderung der effektiven Brechzahl, bewirkt durch das Einwirken der Messubstanz 3 ,stets maximale bzw. konstante Intensitaet aufweist. Aus der Aenderung der Lichtwellenlaenge kann auf die Aenderung der effektiven Brechzahl geschlossen werden.

In Fig. 3 ist eine erfindungsgemaesse Messeinrichtung mit einem Gitterauskoppler gezeigt. Wellenleiter 1/2, Beugungsgitter 4 und selektiv chemisorbierende Zusatzschicht 5 sind in Fig. 1 beschrieben. Faellt eine gefuehrte Welle 8 auf das Beugungsgitter 4, so wird das Laserlicht teilweise oder vollstaendig ausgekoppelt. Der ausgekoppelte Laserstrahl 9 tritt bei konstanter Lichtwellenlaenge des Lasers unter einem bestimmten Winkel W2, der durch die effektive Brechzahl bestimmt ist, aus dem Wellenleiter 1/2 aus. Die Erzeugung des Modes 8 ist in Fig. 3 nicht eingezeichnet. Der Mode kann beispielsweise durch Stirnflaechenkopplung, Prismeneinkopplung, Gittereinkopplung etc. angeregt werden ( vergleiche hierzu T. Tamir, Integrated Optics, Kap. 3). Eine durch Einwirkung der Messubstanz 3 bewirkte Aenderung der effektiven Brechzahl in der Gitterregion hat eine Aenderung des Auskopplungswinkels W2 zur Folge. Diese Winkelaenderung kann beispielsweise mit einem Diodenarray oder einem positionsabhaengigen Detektor D2 gemessen werden. Bei kleinen Winkelaenderungen des ausgekoppelten Laserstrahls 9 kann auch mit Hilfe eines Detektors D2, dessen Detektionsflaeche kleiner als der Strahldurchmesser ist, eine Aenderung der auf den Detektor D2 einfallenden Intensitaet des ausgekoppelten Laserstrahls 9 gemessen werden, da sich der ausgekoppelte Laserstrahl 9 waehrend des Messvorgangs ueber den Detektor D2 hinwegbewegt. Aus der Winkelaenderung bzw. der Intensitaetsaenderung kann auf die Aenderung der effektiven Brechzahl geschlossen werden.

Wird ein abstimmbarer Laser verwendet, so besteht die Moeglichkeit, den Auskopplungswinkel W2 durch geeignete Wahl der Lichtwellenlaenge trotz der durch die Einwirkung der Messubstanz 3 bewirkten Aenderungen der effektiven Brechzahl konstant zu halten. Aus der Aenderung der Lichtwellenlaenge kann wiederum auf die Aenderung der effektiven Brechzahl geschlossen werden.

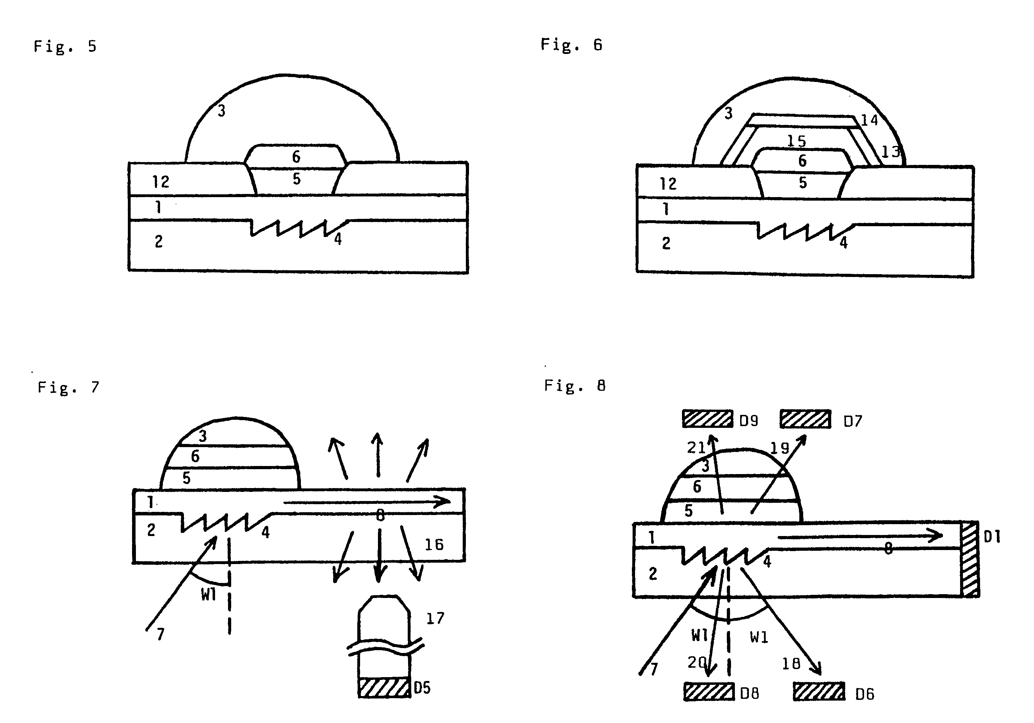

In Fig. 4 ist ein sogenannter Bragg-Reflektor gezeigt. Aus Platzgruenden sind in Fig. 4 die selektiv wirkende Zusatzschicht 5 und die Schicht 6 nicht eingezeichnet. Die fuer die Gitterkoppler (Fig. 2 und 3) verwendeten Beugungsitter koennen auch als Bragg-Reflektoren eingesetzt werden. Eine gefuehrte Lichtwelle 8 wird am Beugungsgitter 4 Bragg-reflektiert, falls die Bragg-Bedingung erfuellt ist, d.h. falls der Glanzwinkel W3 dem Bragg-Winkel entspricht (vergleiche hierzu W. Lukosz und K. Tiefenthaler, Optics Letters 8 (1983), 537-539). Fuer die Erzeugung des gefuehrten Modes 8 gilt das gleiche wie das zu Fig. 3 Gesagte. Die Detektoren D3 und D4 messen die Intensitaet eines am Beugungsgitter 4 reflektierten Modes 10 und/oder die Intensitaet des transmittierten Modes 11. Der Braggwinkel W3 wird durch die effektive Brechzahl N in der Gitterregion festgelegt. Aendert sich die effektive Brechzahl N aufgrund der Einwirkung der Messubstanz 3, so wird die Bragg-Bedingung gestoert. Die Intensitaeten des reflektierten und transmittierten Modes aendern sich. Durch Messung der Lichtintensitaet des reflektierten Modes 10 und/oder des transmittierten Modes 11 mit den Detektoren D3 und/oder D4 kann auf die Aenderung der effektiven Brechzahl geschlossen werden. Es besteht auch die Moeglichkeit, den Winkel W3 derart zu waehlen, dass die Bragg-Bedingung gerade nicht erfuellt und somit kein reflektierter Mode 10 vorhanden ist. Hat die effektive Brechzahlaenderung einen gewuenschten Wert erreicht, tritt ein reflektierter Mode 10 auf, da die Bragg-Bedingung dann erfuellt ist.

Eine andere Messmethode macht sich die Abhaengigkeit der Bragg-Bedingung von der Lichtwellenlaenge zunutze. Trotz der durch die Einwirkung der Messubstanz 3 bedingten effektiven Brechzahlaenderung kann die Bragg-Bedingung eingehalten werden, indem die Lichtwellenlaenge des Lesers entsprechend gewaehlt wird. Die Aenderung der effektiven Brechzahl wird dann aus der Aenderung der Lichtwellenlaenge ermittelt.

Der Bragg-Reflektor kann insbesondere auch mit einem Glanzwinkel W3 von 90 Grad betrieben werden. Der gefuhrte Mode 8 wird dann retroreflektiert. Dies hat unter anderem den Vorteil, dass der reflektierte Mode seine urspruengliche Breite beibehaelt und nicht aufgefaechert wird. Auch kann anstelle eines planaren wellenleitenden Films ein Streifenwellenleiter verwendet werden.

Als Bragg-Reflektor kann speziell das in der Beschreibung zu Fig. 1 erwaehnte Beugungsgitter mit ortsabhaengiger Modulation verwendet werden, insbesondere ein Beugungsgitter, das aus zwei stark modulierten Gitterbereichen besteht, die durch einen weniger stark modulierten Bereich voneinander getrennt sind. Die Zusatzschicht 5 kann sich gegebenenfalls nur auf dem schwach modulierten Gitterbereich befinden. Dieses beschriebene Gitter kann nicht nur als Bragg-Reflektor, sondern auch als Gitterein- oder Gitterauskoppler verwendet werden. Bei Verwendung dieses Gitters als Gitterauskoppler tritt auf dem Detektor D2 in Fig. 3 ein Streifensystem auf. Bei Verwendung dieses Gitters als Gittereinkoppler weist der Einkopplungswirkungsgrad als Funktion der effektiven Brechzahl N oder des Einfallswinkels W1 einige Maxima und Minima auf. Bei Verwendung dieses Gitters als Bragg-Reflektor weist das Transmissions- und Reflexionsvermoegen als Funktion der effektiven Brechzahl einige Maxima und Minima auf.

In den Figuren 1-8 ist der wellenleitende Film 1 als planare Struktur eingezeichnet. Es gibt jedoch noch andere Strukturen, in denen Lichtwellenleitung hervorgerufen werden kann. Beispielsweise kann anstatt des planaren wellenleitenden Films 1 ein Streifenwellenleiter verwendet werden. Der wellenleitende Film 1 liegt dann nur in Form eines Streifens vor. Der Streifen kann sich sowohl auf dem Substrat befinden als auch in das Substrat (aber nahe der Oberflaeche) eingebettet sein. Die Brechzahl des Streifens ist hoeher als die der Umgebungsmaterialien. Die gefuehrte Lichtwelle 8 wird dann in beiden Ortskoordinaten senkrecht zur Ausbreitungsrichtung durch Totalreflexion gefuehrt.

Durch Lichtstreuung oder Lichtabsorption an der Messubstanz 3 und/oder an adsorbierten Makromolekuelen, beispielsweise Proteinen, kann der Mode nach Verlassen der Gitterregion so stark geschwaecht werden, dass eine Messung der Lichtintensitaet nicht mehr moeglich ist. Um diesen stoerenden Effekt zu verhindern, ist es vorteilhaft, - wie in Fig. 5 gezeigt - den wellenleitenden Film 1 ausserhalb der Gitterregion mit einer Schutzschicht 12 zu bedecken. Diese Schutzschicht 12, die eine genuegend kleine Brechzahl haben muss, kann beispielsweise eine SiO2-Schicht sein. Die Schichtdicke der Schutzschicht 12 muss so gross gewaehlt werden, dass ausserhalb der Gitterregion der Mode mit der Messubstanz 3 nicht mehr wechselwirkt, weil sein quergedaempftes Feld hinreichend stark abgefallen ist. Die Schutzschicht 12 kann auch dazu verwendet werden, den stoerenden Einfluss der Befestigungseinrichtung einer in der Figur 6 eingezeichneten Kuevette 13 auf den gefuehrten Mode zu verhindern.

In Fig. 6 ist eine gegenueber Fig. 5 erweiterte Anordnung mit einer Membran 14 zu sehen, die sowohl Selektivitaet als auch Stabilitaet des optischen Sensors verbessert. Mit der Membran 14 wird erreicht, dass nur eine "gefilterte" Messubstanz 15 mit der wellenleitenden Struktur 1 bzw. der Zusatzschicht 5 in Kontakt kommt, d. h. es soll in der "gefilterten" Messubstanz 15 neben einem Loesungsmittel bzw. einer Pufferloesung nur jene spezifische Substanz vorhanden sein, die es nachzuweisen gilt. Dies wird dadurch erreicht, dass die Messubstanz 3 auf eine gegebenenfalls von einer Kuevette 13 getragene Membran 14 aufgebracht wird, die aus der Messubstanz 3 nur die nachzuweisende Substanz durchdiffundieren laesst, die restlichen nicht nachzuweisenden Substanzen aber zurueckhaelt.

Weist die Membran eine genuegend hohe Selektivitaet auf, so kann die Zusatzschicht 5 eventuell entfallen. Es findet in diesem Fall eine unspezifische Ad- oder Chemisorption an der wellenleitenden Struktur 1 statt. Messubstanz 3 und "gefilterte" Messubstanz 15 koennen entweder fluessig oder gasfoermig sein.

Es besteht auch die Moeglichkeit, die Zusatzschicht 5 direkt mit einer (biologischen) Membran zu beschichten. Die Rezeptoren koennen nicht nur in Form einer Zusatzschicht 5 vorliegen, sondern auch als Implantat in der Membran selbst vorhanden sein.

Ist die Membran genuegend bestaendig, wie beispielsweise eine Glasmembran, so kann die Membran die Funktion des Substrats uebernehmen. In diesem Fall wird die Membran gegebenenfalls zuerst mit einer Zusatzschicht 5 und dann mit einem wellenleitenden Film 1 beschichtet. Die Messubstanz wird jetzt auf das Membran-Substrat aufgebracht.

In Fig. 2 und 4 sind Detektoren eingezeichnet, die die Intensitaet der gefuehrten Wellen 8 bzw. 10 und 11 direkt messen. Es besteht aber auch die Moeglichkeit, eine gefuehrte Lichtwelle beispielsweise mit einem zweiten Gitter zuerst auszukoppeln und dann die Intensitaet des ausgekoppelten Laserstrahls mit einem Detektor zu messen. Diese Intensitaet ist proportional zur Intensitaet der gefuehrten Welle. Der Auskopplungsmechanismus des zweiten Gitters darf von der Messubstanz 3 nicht gestoert werden. Dies kann beispielsweise erreicht werden, indem in der Region des zweiten Gitters eine Schutzschicht den Wellenleiter von der Messubstanz 3 trennt oder in dieser Gitterregion ueberhaupt keine Messubstanz 3 vorhanden ist (Naeheres zur Schutzschicht vergleiche Erlaeuterungen zu Fig. 5). Die Auskopplung kann aber auch ueber einen Prismenkoppler oder einen Taper erfolgen (vergleiche hierzu T. Tamir, Integrated Optics, Kap. 3).

Eine weitere Detektionsmoeglichkeit ist in Fig. 7 beschrieben. Im Gegensatz zu der Anordnung gemaess Fig. 2 wird die Intensitaet der gefuehrten Lichtwelle 8 nicht direkt gemessen sondern das vom Mode 8 erzeugte Streulicht 16 wird mit einer Faseroptik 17 aufgefangen und dem Detektor D5 zugefuehrt. Die Intensitaet des Streulichtes 16 ist proportional zur Intensitaet des Modes 8. Das Streulicht 16 ist aufgrund von nicht vermeidbaren Inhomogenitaeten des Wellenleiters 1/2 stets vorhanden. In gleicher Weise kann beim Bragg-Reflektor (Fig. 4) anstatt der direkten Messung der Intensitaet der gefuehrten Wellen 10 und/oder 11 die Intensitaet des Streulichtes des reflektierten Modes 10 und/oder des transmittierten Modes 11 gemessen werden.

In Fig. 8 ist eine weitere indirekte Detektionsmoeglichkeit dargestellt. Trifft ein Laserstrahl 7 auf ein Beugungsgitter 4, so treten verschiedene Beugungsordnungen auf, und zwar in Reflexion als auch in Transmission. Ist der Winkel W1 richtig gewaehlt, so wird der Laserstrahl 7 ueber eine und nur eine Beugungsordnung in den wellenleitenden Film 1 eingekoppelt. Nach dem Energieerhaltungssatz fehlt dann diese eingekoppelte Leistung in den uebrigen Beugungsordnungen. Theorie und Experiment zeigen, dass im Falle der Einkopplung des Laserstrahls 7 in den wellenleitenden Film 1 unter bestimmten Voraussetzungen eine Verstaerkung der Intensitaet in gewissen nicht eingekoppelten Beugungsordnungen auftritt. Daher koennen Aenderungen der Intensitaet des gefuehrten Modes 8 auch dadurch gemessen werden, dass man die Aenderungen der Intensitaet einer oder mehrerer nicht eingekoppelter Beugungsordnungen 18-21 mit den Detektoren D6 - D9 misst. In Fig. 8 bedeuten der reflektierte Strahl 18 die nullte reflektierte Beugungsordnung, der transmittierte Strahl 19 die nullte transmittierte Beugungsordnung, d.h. das unabgebeugt durchgehende Licht. Die Strahlen 20 und 21 sind Beugungsordnungen hoeherer Ordnung in Reflexion bzw. in Transmission. Auch beim Bragg-Reflektor (Fig. 4) treten neben den Moden 10 und 11 unter gewissen Bedingungen noch andere Beugungsordnungen auf, die in den Raum frei abgestrahlt werden und deren Intensitaeten deshalb leicht detektierbar sind.

Die Empfindlichkeit des integriert optischen Sensors ist dann besonders gross, wenn bei vorgegebener einwirkender Messubstanz 3 die Aenderung der effektiven Brechzahl moeglichst gross ist. Aus der Theorie folgt, dass besonders hohe Empfindlichkeiten dann erreicht werden, wenn der wellenleitende Film 1 eine wesentlich hoehere Brechzahl hat als das Substrat 2 und die Messubstanz 3, und wenn die Schichtdicke des wellenleitenden Films 1 etwas groesser als die Mindestschichtdicke gewaehlt wird. Eine Mindestschichtdicke ( sog. cut-off-Schichtdicke ) des wellenleitenden Films 1 ist erforderlich, um ueberhaupt eine gefuehrte Welle im wellenleitenden Film 1 anregen zu koennen (vergleiche hierzu T. Tamir, Integrated Optics, Springer, Berlin 1979, Kap. 2). Damit moeglichst hohe Empfindlichkeiten erreicht werden, empfiehlt es sich, die Brechzahl des wellenleitenden Films 1 mindestens 1%, vorzugsweise mehr als 10% groesser als diejenige des Substrats 2 bzw. der Messubstanz 3 zu waehlen. Nur wenn Brechzahlaenderungen einer Messubstanz 3 gemessen werden, deren Brechzahl groesser als die des Substrats 2 ist, so ist fuer die Erreichung einer hohen Empfindlichkeit der hohe Brechzahlunterschied zwischen wellenleitendem Film 1 und Substrat 2 bzw. Messubstanz 3 unwesentlich.

Wenn die Empfindlichkeiten aus der Theorie bekannt sind, kann aus gemessenen effektiven Brechzahlaenderungen eines gefuehrten Modes entweder auf den Zustand des Adsorptions- bzw. Desorptionsprozeses, insbesondere auf die Aenderung der Schichtdicke der Chemisorbatschicht 6, oder auf die Brechzahlaenderung der Messubstanz 3 geschlossen werden. Sollen mit dem optischen Sensor sowohl die Schichtdickenaenderung der Chemisorbatschicht 6 als auch die Brechzahlaenderung der Messubstanz 3 gleichzeitig bestimmt werden, so muessen gleichzeitig die effektiven Brechzahlaenderungen zweier verschiedener gefuehrter Moden gemessen werden. In dem Fall, dass das Feld des gefuehrten Modes in der Adsorbatschicht 6 quergedaempft (evaneszent) ist, muss die Dicke der Schicht 6 kleiner als die sogenannte Eindringtiefe sein, damit Brechzahlaenderungen der Messubstanz 3 gemessen werden koennen.

Fuer die gleichzeitige Anregung zweier verschiedener Moden gleicher Wellenlaenge muessen im Fall des Gittereinkopplers (Fig. 2) jedoch zwei Laserstrahlen unter verschiedenen Einfallswinkeln gleichzeitig auf das Beugungsgitter 4 fallen. Auch wenn nur ein Laser zur Verfuegung steht, kann diese Bedingung erfuellt werden, indem eine geeignete Strahlteilungsoptik verwendet wird.

Die gleichzeitige Messung von Intensitaetsaenderungen zweier verschiedener Moden kann ueber nicht eingekoppelte Beugungsordnungen oder ueber die durch eine zweite Kopplungstechnik ausgekoppelte Wellen erfolgen, da sich die im Raum frei ausbreitenden Wellen, die verschiedenen Moden zuzuordnen sind, winkelmaessig voneinander unterscheiden und deshalb getrennt detektierbar sind.

Ist jedoch absolute Gleichzeitigkeit fuer die beiden Intensitaetsmessungen nicht erforderlich, so kann am Ende des Wellenleiters 1/2 eine direkte Intensitaetsmessung der beiden Moden im Multiplex-Verfahren erfolgen, indem einmal der den einen Mode anregende einfallende Laserstrahl abgedeckt wird, und umgekehrt. Bei sehr langsamen Vorgaengen ist es auch zulaessig, die beiden gefuehrten Moden mit einem einzigen einfallenden Laserstrahl nacheinander anzuregen, indem nacheinander die entsprechenden Einfallswinkel eingestellt und gemessen werden.

Es besteht aber auch die Moeglichkeit, die beiden Einfallswinkel beispielsweise derart zu waehlen, dass sich die beiden gefuehrten Moden in entgegengesetzter Richtung im Wellenleiter 1/2 ausbreiten. Die beiden Intensitaetsaenderungen koennen dann mit zwei oertlich voneinander getrennten Detektoren gleichzeitig und direkt registriert werden.

Gleichzeitige Messung von effektiven Brechzahlaenderungen zweier gefuehrter Moden kann aber auch nur mit einem einzigen einfallenden Laserstrahl erfolgen, der aber spektral aus zwei separaten (abstimmbaren) Wellenlaengen besteht, sodass die beiden verschiedenen Moden, die sich zusaetzlich noch in der Wellenlaenge unterscheiden, im Wellenleiter 1/2 gleichzeitig angeregt werden koennen.

Sollen sowohl Schichtdickenaenderung der Chemisorbatschicht 6 als auch Brechzahlaenderung der Messubstanz 3 mit einem Gitterauskoppler oder Bragg-Reflektor bestimmt werden, so muessen gleichzeitig zwei verschiedene Moden aus dem Wellenleiter 1/2 ausgekoppelt bzw. am Gitter 4 Bragg-reflektiert werden.

Um bei den Intensitaetsmessungen eine hohe Messgenauigkeit erzielen zu koennen, ist ein gutes Signal-zu-Rausch-Verhaeltnis erforderlich. Fluktuationen der Laserleistung beeintraechtigen die Messgenauigkeit. Dieses Rauschen kann dadurch eliminiert werden, dass ein Teil des Lichts des einfallenden Leserstrahls irgendwo vor dem Beugungsgitter 4, ueber einen Strahlteiler ausgespiegelt wird, einem Referenzdetektor zugefuehrt wird und dann das Verhaeltnis von Messignal durch Referenzsignal gebildet wird.

Das Signal-zu-Rausch-Verhaeltnis kann auch durch die Verwendung der bekannten Lock-in-Technik verbessert werden. Bei dieser wird das auf das Beugungsgitter 4 auffallende Leserlicht moduliert. Dazu wird entweder das Licht eines CW-Lasers mit einem Chopper moduliert oder es wird beispielsweise eine gepulste Laserdiode oder lichtemittierende Diode (LED) als Lichtquelle eingesetzt.

Fuer ein gutes Signal-zu-Rausch-Verhaeltnis ist ferner notwendig, dass der Beleuchtungsfleck auf dem Beugungsgitter 4, d.h. jene Flaeche, die beispielsweise im Falle des Gittereinkopplers vom Laserstrahl 7 beleuchtet wird, oertlich stabil bleibt. Dies kann erreicht werden, indem ein Laser mit moeglichst hoher Strahlwinkelstabilitaet ausgewaehlt wird und dieser moeglichst nahe an das Beugungsgitter herangefahren wird oder indem zwischen Laser und Beugungsgitter 4 eine Linse eingebaut wird, die die Ebene der Strahleinschnuerung auf das Beugungsgitter 4 abbildet. Die Strahlwinkelstabilitaet hat auch direkt einen Einfluss auf den Einfallswinkel W1. Laser mit hoher Strahlwinkelstabilitaet erhoehen die Messgenauigkeit des optischen Sensors, da der Einfallswinkel W1 genauer definiert ist.

Da das elektromagnetische Feld der gefuehrten Lichtwelle als quergedaempfte Welle mit der Messubstanz 3 wechselwirkt und dementsprechend um weniger als eine Lichtwellenlaenge weit in die Messubstanz 3 eindringt, koennen Brechzahlaenderungen an sehr geringen Messubstanzmengen bestimmt werden. Wird das Beugungsgitter 4 ueber die gesamte Laenge L beleuchtet und hat der Beleuchtungsfleck parallel zu den Gitterstrichen eine Ausdehnung von 0.1 mm, so betraegt fuer L = 2 mm und fuer eine Lichtwellenlaenge von 500 nm das Mindestmessvolumen V = 2mm * 0.1mm * 500nm = 0.1 Nanoliter

Da der optische Sensor sehr empfindlich sowohl auf Brechzahlaenderungen der Messubstanz 3 als auch auf Adsorption von spezifischen Molekuelen der Messubstanz 3 reagiert und da das Mindestmessvolumen sehr gering ist, draengt sich ein Einsatz des optischen Sensors als Detektor beispielsweise in der Fluessigkeits-, Gas- und Affinitaetschromatographie auf.

Da der optische Sensor aus wenigen (passiven) Elementen, die auf einem Substrat integriert sind, besteht, wird er billig herstellbar sein und damit beispielsweise in der Biosensorik und medizinischen Diagnostik als Einwegsensor verwendet werden koennen.

Ein weiterer Vorteil der beschriebenen optischen Sensoren besteht darin, dass mehrere davon auf eimem Substrat angebracht werden koennen. Diese Sensoren koennen verschiedene Zusatzschichten 5 und/oder Membranen 14 aufweisen und damit fuer verschiedene nachzuweisende Substanzen selektiv empfindlich sein. Die verschiedenen Sensoren koennen von einem Laser entweder gleichzeitig oder nacheinander abgefragt werden.

## Patentansprüche

1. Optischer Sensor zum selektiven Nachweis von Substanzen in gasförmigen, flüssigen oder festen Messubstanzen (3), mit einem Substrat (2) und einer an der Oberfläche des Substrats vorhandenen wellenleitenden Struktur (1), welche mit einem als Gitterkoppler oder Bragg-Reflektor dienenden Beugungsgitter (4) versehen ist, wobei die Brechzahl der wellenleitenden Struktur (1) grösser als diejenige des Substrats (2) ist, dadurch gekennzeichnet, dass die Brechzahl der wellenleitenden Struktur (1) mindestens 1% grösser als diejenigen des Substrats (2) beziehungsweise der Messubstanz (3) ist, und dass eine chemoempfindliche Substanz (5) vorhanden ist, wobei die chemoempfindliche Substanz (5) wenigstens im Beugungsgitterbereich an einer Kontaktzone mit der wellenleitenden Struktur (1) in Berührung steht und dort mit der Messubstanz (3) in Kontakt bringbar ist und so gewählt ist, dass sie die nachzuweisende Substanz im Innern oder an der Oberfläche an sich bindet.

2. Optischer Sensor nach Anspruch 1, dadurch gekennzeichnet, dass die wellenleitende Struktur (1) eine Schictdicke aufweist, die etwas grösser als die cut-off Schichtdicke ist.

3. Optischer Sensor nach Anspruch 1 oder 2, dadurch gekennzeichnet, dass die wellenleitende Struktur (1) ausserhalb der Kontaktzone mit einer Schutzschicht (12) bedeckt ist.

4. Optischer Sensor nach Anspruch 3, dadurch gekennzeichnet, dass die Schutzschicht (12) bei der Kontaktzone die Form eines Tapers aufweist.

5. Optischer Sensor nach einem der Ansprüche 1 bis 4, dadurch gekennzeichnet, dass die Brechzahl der wellenleitenden Struktur (1) wenigstens 10% grösser als diejenige des Substrats (2) beziehungsweise der Messubstanz (3) ist.

6. Optischer Sensor nach einem der Ansprüche 1 bis 5, dadurch gekennzeichnet, dass die chemoempfindliche Substanz (5) in der wellenleitenden Struktur (1) integriert ist.

7. Optischer Sensor nach einem der Ansprüche 1 bis 6, dadurch gekennzeichnet, dass das Beugungsgitter (4) zwei stark modulierte Gitterbereiche, getrennt durch einen schwach modulierten Gitterbereich aufweist.

8. Optischer Sensor nach Anspruch 7, dadurch gekennzeichnet, dass die chemoempfindliche Substanz (5) nur auf dem schwach modulierten Gitterbereich angeordnet ist.

9. Verwendung des optischen Sensors nach einem der Ansprüche 1 bis 8, dadurch gekennzeichnet, dass die durch bei der chemoempfindlichen Substanz (5) ablaufende Reaktionen bewirkten Änderungen der effektiven Brechzahl eines sich in einer aus wellenleitender Struktur (1) und chemoempfindlicher Substanz (5) bestehenden Anordnung ausbreitenden Modes (8) gemessen werden.

10. Verwendung nach Anspruch 9, dadurch gekennzeichnet, dass ein Lichtstrahl (7), der unter einem fest gewählten Einfallswinkel (W1) auf das Beugungsgitter (4) gerichtet wird, über dieses Beugungsgitter (4) in die wellenleitende Struktur (1) eingekoppelt wird und dass Änderungen der effektiven Brechzahl des Modes (8) durch die Änderungen der Intensität des Modes (8) bestimmt werden.

11. Verwendung nach Anspruch 9, dadurch gekennzeichnet, dass ein Einfallswinkel (W1), unter dem ein Lichtstrahl (7) auf das Beugungsgitter (4) gerichtet wird, so nachjustiert wird, dass der Mode (8) die grösstmögliche oder eine gleichbleibende Intensität hat und dass die Änderungen der effektiven Brechzahl des Modes (8) durch den Änderungen des Einfallswinkels (W1) bestimmt werden.

12. Verwendung nach Anspruch 9, dadurch gekennzeichnet, dass der Mode (8) durch das Beugungsgitter (4) aus der wellenleitenden Struktur (1) ausgekoppelt wird und dass die Änderungen der effektiven Brechzahl durch die Änderungen eines Auskopplungswinkels (W2) bestimmt werden.

13. Verwendung nach Anspruch 9, dadurch gekennzeichnet, dass der Mode (8) unter einem Glanzwinkel (W3) auf das Beugungsgitter (4) gerichtet und Bragg-reflektiert wird und dass die Änderungen der effektiven Brechzahl durch die Änderungen der Intensität des reflektierten Modes (10) und/oder des transmittierten Modes (11) bestimmt werden.

**Claims**

1. Optical sensor for selective detection of substances in gaseous, liquid or solid measuring substances (3), comprising a substrate (2) and a wave-guiding structure (1) at the surface of the substrate which is provided with a diffraction grating (4) serving as grating coupler or Bragg reflector, whereby the refractive index of the wave-guiding structure (1) is higher than that of the substrate (2), **characterised in that** the refractive index of, the wave-guiding structure (1) is at least 1% higher than that of the substrate (2) or the measuring substance (3) respectively, and in that there is a chemo-sensitive substance (5), wherein the chemo-sensitive substance (5) makes contact in a contact zone at least in the diffraction-grating region with the wave-guiding structure (1) where it is contactable to the measuring substance (3) and is chosen so that the substance to be assayed is bound thereto internally or at the surface.

2. Optical sensor according to claim 1, **characterised in that** the wave-guiding structure (1) has a layer thickness which is somewhat greater than the cut-off layer thickness.

3. Optical sensor according to claim 1 or 2, **characterised in that** the wave-guiding structure (1) is covered outside the contact zone with a protective layer (12).

4. Optical sensor according to claim 3, **characterised in that** the protective layer (12) is tapered at the contact zone.

5. Optical sensor according to one of claims 1 to 4, **characterised in that** the refractive index of the wave-guiding structure (1) is at least 10% higher than that of the substrate (2) or the measuring substance (3) respectively.

6. Optical sensor according to one of claims 1 to 5, **characterised in that** the chemo-sensitive substance (5) is integrated into the wave-guiding structure (1).

7. Optical sensor according to one of claims 1 to 6, **characterised in that** the diffraction grating (4) comprises two strongly modulated grating regions which are separated by a slightly modulated grating region.

8. Optical sensor according to claim 7, **characterised in that** the chemo-sensitive substance (5) is arranged on the slightly modulated grating region only.

9. Use of the optical sensor according to one of claims 1 to 8, **characterised in that** the changes of the effective refractive index, which are caused by reactions of the chemo-sensitive substance (5), of a mode (8) which propagates in an arrangement consisting of wave-guiding structure (1) and chemo-sensitive substance (5), are measured.

10. Use according to claim 9, **characterised in that** a light beam (7), which is directed to the diffraction grating (4) at a fixed chosen angle of incidence (WI), is coupled via this diffraction grating (4) into the wave-guiding structure (1), and in that changes of the effective refractive index of the mode (8) are determined by changes of the intensity of the mode (8).

11. Use according to claim 9, **characterised in that** an angle of incidence (WI) at which a light beam (7) is directed to the diffraction grating (4) is adjusted in such a way that the mode (8) has the highest or a stable intensity, and in that changes of the effective refractive index of the mode (8) are determined by changes of the angle of incidence (WI).

12. Use according to claim 9, **characterised in that** the mode (8) is coupled out of the wave-guiding structure (1) by the diffraction grating (4), and in that changes of the effective refractive index are determined by changes of an out-coupling angle (W2).

13. Use according to claim 9, **characterised in that** the mode (8) is directed under a glance angle (W3) to the diffraction grating (4) and is bragg-reflected, and in that changes of the effective refractive index are determined by changes in the intensity of the reflected mode (10) and/or of the transmitted mode (11).

## Revendications

1. Senseur optique pour identification sélective de substances à mesurer (3) gazeuses, liquides ou solides, avec un substrat (2) et une structure de guidage d'ondes (1) existant à la surface du substrat, qui est munie d'un réseau de diffraction (4) servant de coupleur de réseau ou de réflecteur de Bragg, l'indice de réfraction de la structure (1) de guidage d'ondes étant supérieur à celui du substrat (2), caractérisé en ce que l'indice de réfraction de la structure (1) de guidage d'ondes est au moins supérieur de 1 % à celui du substrat (2) respectivement de la substance à mesurer (3), et en ce qu'il existe une substance (5) chimiquement sensible, la substance chimiquement sensible étant en contact au moins dans la zone du réseau de diffraction sur une zone de contact avec la structure (1) de guidage d'ondes et pouvant être amenée en contact avec la substance à mesurer (3) et étant choisie de façon qu'elle lie avec elle la substance à identifier, soit de façon interne, soit en surface.

2. Senseur optique selon la revendication 1, caractérisé en ce que la structure (1) de guidage d'ondes présente une épaisseur de couche, qui est un peu supérieure à l'épaisseur de couche "cut-off".

3. Senseur optique selon les revendications 1 ou 2, caractérisé en ce que la structure (1) de guidage d'ondes est recouverte en dehors de la zone de contact d'une couche protectrice (12).

4. Senseur optique selon la revendication 3, caractérisé en ce que la couche de protection (12) présente dans la zone de contact la forme d'un cône.

5. Senseur optique selon l'une des revendications 1 à 4, caractérisé en ce que l'indice de réfraction de la structure (1) de guidage d'ondes est supérieur d'au moins 10 % à celui du substrat (2) respectivement de la substance à mesurer (3).

6. Senseur optique selon l'une des revendications 1 à 5, caractérisé en ce que la substance (5) chimiquement sensible est intégrée dans la structure (1) de guidage d'ondes.

7. Senseur optique selon l'une des revendications 1 à 6, caractérisé en ce que le réseau de diffraction (4) comprend deux zones de réseau fortement modulées, séparées par une zone de réseau faiblement modulée.

8. Senseur optique selon la revendication 7, caractérisé en ce que la substance (5) chimiquement sensible est disposée seulement sur la zone de réseau faiblement modulée.

9. Utilisation du senseur optique selon l'une des revendications 1 à 8, caractérisée en ce que les variations sont mesurées, créées par des réactions partant de la substance (5) chimiquement sensible, de l'indice de réfraction effectif d'un mode (8) se propageant dans un dispositif constitué d'une structure (1) de guidage d'ondes et d'une substance (5) chimiquement sensible.

10. Utilisation selon la revendication 9, caractérisée en ce qu'un rayon lumineux (7), qui est dirigé sous un angle d'incidence (W1) fixement choisi sur le réseau de diffraction (4), est couplé par ce réseau de diffraction (4) dans la structure (1) de guidage d'ondes et en ce que les variations de l'indice de réfraction effectif du mode (8) sont déterminées par les variations de l'intensité du mode (8).

11. Utilisation selon la revendication 9, caractérisée en ce que l'angle d'incidence (W1), sous lequel est dirigé un rayon lumineux (7) sur le réseau de diffraction (4), est ensuite ajusté, de façon que le mode (8) ait une intensité la plus grande possible ou une instensité constante et que les variations de l'indice de réfraction effectif du mode (8) soient déterminées par les variations de l'angle d'incidence (W1).

12. Utilisation selon la revendication 9, caractérisée en ce le mode (8) est découplé par le réseau de diffraction (4) à partir de la structure (1) de guidage d'ondes et en ce que les variations de l'indice de réfraction effectif sont déterminées par les variations d'un angle de découplage (W2).

**13.** Utilisation selon la revendication 9, caractérisée en ce que le mode (8) est dirigé sur le réseau de diffraction (4) sous un angle de brillance (W3) et est réfléchi selon Bragg et en ce que les variations de l'indice de réfraction effectif sont déterminées par les variations de l'intensité du mode (10) réfléchi et/ou du mode (11) transmis.

Fig. 1

Fig. 2

Fig. 3

Fig. 4

Fig. 5

Fig. 6

Fig. 7

Fig. 8